# EUROPÄISCHE PATENTSCHRIFT

(11) **EP 1 058 170 B1**
(45) Veröffentlichungstag und Bekanntmachung des Hinweises auf die Patenterteilung: **04.03.2009**
(21) Anmeldenummer: 00110790.3
(22) Anmeldetag: 20.05.2000
(51) Int. Cl.: G05B 19/042

(54) **Leit/Steuersystem**
Guide-/control system
Système de guidage/commande

(30) Priorität: 04.06.1999 DE 19925547
(43) Veröffentlichungstag der Anmeldung: 06.12.2000
(73) Patentinhaber: ABB AG, 68309 Mannheim (DE)
(72) Erfinder: Schürmann, Wilhelm, Dipl.-Ing., 58515 Lüdenscheid (DE)

(56) Entgegenhaltungen:
- EP-A- 0 518 220
- WO-A-99/18496
- DE-U- 9 304 021
- DE-U- 29 511 294
- US-A- 5 081 627
- US-B- 4 972 470
- PATENT ABSTRACTS OF JAPAN vol. 1999, no. 03, 31. März 1999 (1999-03-31) & JP 10 321326 A (N T T FACILITIES:KK;NIPPON TELEGR & TELEPH CORP <NTT>), 4. Dezember 1998 (1998-12-04)

## Beschreibung

Die Erfindung bezieht sich auf ein Leit/Steuersystemauf einen Bus-Stecker hierfür und auf ein Baukastensystem mit Bus-Steckern.

Bei einem Leit/Steuersystem sind eine Vielzahl von Eingabeeinheiten und/oder Ausgabeeinheiten und/oder Ein/Ausgabe-Einheiten und/oder Sensoren und/oder Aktoren - nachstehend Einheiten genannt - an einen Bus anzuschließen, welcher mit einem Zentralrechner verbunden ist. Bei der Inbetriebnahme des Leit/Steuersystems erfolgt eine Aktivierung /Deaktivierung der einzelnen Einheiten und eine Einstellung von spezifischen Parametern der Einheiten durch entsprechende Vorgaben an den Zentralrechner. Dies ist relativ umständlich, zeitaufwendig und damit kostenintensiv. Des Weiteren ist es erforderlich, dass die verwendeten Einheiten hinsichtlich ihrer angegebenenlempfangenen Signale exakt an den Bus angepasst sind. Diese Forderung der Signalanpassung schränkt die Auswahlmöglichkeit hinsichtlich der Einheiten ein.

Aus der US-B-4 972 470 ist ein programmierbarer Stecker bekannt, weicher einerseits eine Busanschaltung und andererseits einen Anschluss für ein Gerät, z. B. eine Ausgabeeinheit (Drucker) aufweist. Mittels einer steckerintemen Elektronik kann der Geräteanschluss konfiguriert und bezüglich seiner Funktion eingestellt und es können gewünschte Kommunikations-Parameter und für den Datenaustausch notwendige Funktionen, wie Daten-Zwischenspeicherung und Datenverschlüsselung vorgegeben werden.

Aus der WO 99/18496 A ist eine aus einem "intelligenten" Stecker, einem Verbindungskabel und einer analogen Signalumformereinheit inklusive Sensor oder Aktor bestehende Anordnung bekannt, wobei der Stecker an ein digitales Signalverarbeitungssystem anzuschließen ist und ein Interface-Schaltkreis des Steckers inklusive Mikrokontroller die Analog/Digital-Wandlung sowie Signal-Kalibrierung und Daten-Korrektur übernimmt. Des Weiteren ist eine Programmierung des Interface-Schaltkreises vom digitalen Signalverarbeitungssystem her möglich.

Der Erfindung liegt die Aufgabe zugrunde, ein Leit/Steuersystem anzugeben, bei dem eine Signalanpassung und Inbetriebnahme vereinfacht ist.

Diese Aufgabe wird erfindungsgemäß gelöst durch ein Leit/Steuersystem mit einem Zentralrechner, einem Bus und einer Vielzahl von Eingabeeinheiten und/oder Ausgabeeinheiten und/oder Ein/Ausgabe-Einheiten und/oder Sensoren und/oder Aktoren - nachstehend Einheiten genannt - ,
a) mit mehreren Bus-Stecker, welche einerseits über eine erste Steckvorrichtung mit einer Einheit und andererseits über ein Verbindungskabel mit dem Bus verbunden sind,
b) wobei die Bus-Stecker einen zur Signalanpassung der zwischen der Einheit und dem Bus auszutauschenden Signale und zur Aktivierung / Deaktivierung der Einheit und zur Einstellung von spezifischen Parametern der Einheit dienenden Mikrorechner aufweisen,
c) wobei die Bus-Stecker eine zweite, am Verbindungskabel angeschlossene Steckvorrichtung aufweisen,
d) wobei das Verbindungskabel einen zur zweiten Steckvorrichtung kompatiblen Stecker aufweiset,
e) wobei der Anschluss an den Bus über eine Bus-Ankopplung mit einer zum Stecker kompatiblen Steckvorrichtung erfolgt,
f) wobei die Bus-Stecker mit einem über einen entsprechenden optischen Sender ansteuerbaren optischen Empfänger ausgerüstet sind, wodurch der Aktivierung / Deaktivierungs-Zustand der Einheit einstellbar ist und/oder einer Parameter-Vorgabe erfolgt.

Des Weiteren werden ein dementsprechender Bus-Stecker sowie ein Baukasten-System mit Bus-Steckern vorgeschlagen.

Die mit der Erfindung erzielbaren Vorteile bestehen insbesondere darin, dass infolge des vorzugsweise zwischen jeder Einheit und dem Bus eingefügten Bus-Steckers eine individuelle Signalanpassung der zwischen der Einheit und dem Bus auszutauschenden Signale und/oder eine individuelle Aktivierung /Deaktivierung jeder Einheit und/oder eine individuelle Einstellung von spezifischen Parametern jeder Einheit in einfacher Weise und ohne Einbeziehung des Zentralrechners möglich ist.

Weitere Vorteile sind aus der nachstehenden Beschreibung ersichtlich.

Vorteilhafte Ausgestaltungen der Erfindung sind in den Unteransprüchen gekennzeichnet.

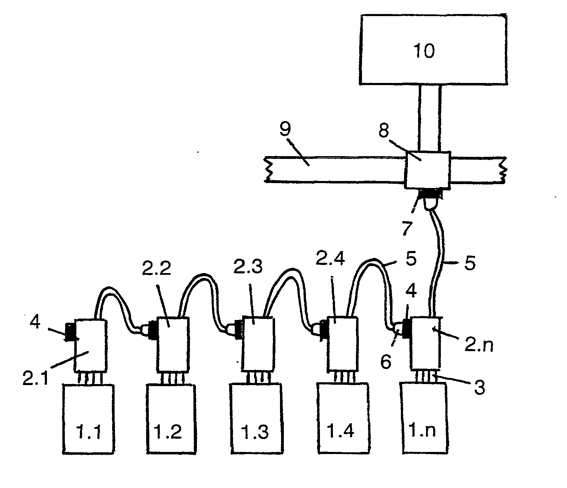

Die Erfindung wird nachstehend anhand des in der Zeichnung dargestellten Ausführungsbeispiels erläutert.

In der einzigen Figur ist ein Prinzipbild des Leit/Steuersystems dargestellt. Erfindunggemäß wird vorgeschlagen, Eingabeeinheiten und/oder Ausgabeeinheiten und/oder Ein/Ausgabe-Einheiten und/oder Sensoren und/oder Aktoren 1.1, 1.2,...1.n - nachfolgend stets vereinfachend als "Einheiten" bezeichnet - über "intelligente" Bus-Stecker 2.1, 2.2,...2.n an einen Bus 9 eines Leit/Steuersystems anzuschließen. Dabei sind die Bus-Stecker 2.1, 2.2,...2.n jeweils über erste Steckvorrichtungen 3 an die zugeordneten Einheiten 1.1, 1.2,...1.n angeschlossen. Jeder Bus-Stecker 2.1, 2.2,...2.n ist mit einer zweiten Steckvorrichtung 4 und mit einem Verbindungskabel 5 versehen.

Das Verbindungskabel 5 einer Einheit 1.1, 1.2,...1.n greift über einen Stecker 6 an seinem Ende in die zweite Steckvorrichtung 4 einer benachbarten Einheit 1.1, 1.2,...1.n. Eine der Einheiten 1.1, 1.2,...1.n greift über ihren Stecker 6 in eine Steckvorrichtung 7 einer Bus-Ankopplung 8, wodurch die Verbindung mit dem Bus 9 und einem Zentralrechner 10 des Busses hergestellt ist. Bei jedem Bus-Stecker 2.1, 2.2,...2.n sind intern die Verbindungskontakte seiner zweiten Steckvorrichtung 4 mit den entsprechenden Leitungen des Verbindungskabels 5 verbunden, so daß die durchgehende Verbindung der Einheiten 1.1, 1.2,...1.n mit dem Bus 9 und dem Zentralrechner 10 sichergestellt ist.

Die geforderte "Intelligenz" jedes Bus-Steckers 2.1, 2.2,...2.n wird durch einen eingebauten Mikrorechner sichergestellt. Dieser Mikrorechner dient zur Signalanpassung der zwischen den Einheiten 1.1, 1.2,...1.n und dem Bus 9 auszutauschenden Signale, beispielsweise Meßsignale, Ansteuersignale usw., zur Aktivierung/Deaktivierung der Einheiten 1.1, 1.2,...1.n und zur Einstellung von spezifischen Parametern der Einheiten 1.1, 1.2,...1.n.

Jeder Bus-Stecker 2.1, 2.2,...2.n kann beispielsweise mit einem Empfänger, vorzugsweise optischen Empfänger (beispielsweise Infrarot-Empfänger) ausgerüstet sein, welcher über einen entsprechenden Sender, vorzugsweise optischen Sender (beispielsweise Infrarot-Sender) ansteuerbar ist, wodurch beispielsweise vorteilhaft eine Aktivierung/Deaktivierung der Einheiten 1.1, 1.2,...1.n und eine Parameter-Vorgabe erfolgen kann. Mittels einer im Bus-Stecker 2.1, 2.2,...2.n befindlichen Leuchtdiode kann der aktuelle EIN/AUS-Zustand der Einheit 1.1, 1.2,...1.n angezeigt werden. Diese Variante mit direkter Aktivierung/Deaktivierungs-Möglichkeit, visueller Anzeige des aktuellen Zustandes und direkter Einstellmöglichkeit der Parameter hat beispielsweise bei der Inbetriebnahme des Leit/Steuersystems einer Anlage große Vorteile. Es kann Zeit eingespart werden. Die Anzahl der erforderlichen Schaltschränke wird herabgesetzt, was den Raumbedarf und den Kostenaufwand reduziert.

Von Wichtigkeit ist es auch, daß eine Kommunikation zwischen Zentralrechner 10 und den einzelnen Mikrorechnern der Einheiten 1.1, 1.2,...1.n möglich ist, so daß beispielsweise ein "Downloaden" von Programmen vom Zentralrechner 10 zu den einzelnen Mikrorechnern erfolgen kann.

Der Bus-Stecker 2.1, 2.2,...2.n kann entsprechend einem "Baukasten-System" in mehreren Leistungsklassen realisiert werden, um eine Anpassung an unterschiedliches Leistungsvermögen der Einheiten 1.1, 1.2,...1.n zu erzielen. Von Vorteil ist es auch, wenn Bus-Stecker 2.1, 2.2,...2.n mit Verbindungskabel 5 unterschiedlicher Länge verfügbar sind, beispielsweise mit Kabellängen von 0,5 m; 1 m; 1,5 m; 2 m usw., um eine optimale Anpassung an den jeweils vorliegenden speziellen Anwendungsfall zu ermöglichen. Des weiteren ist es von Vorteil, wenn Verlängerungs-Verbindungskabel zur Verfügung stehen. Dabei sind auch Verlängerungs-Verbindungskabel realisierbar, die an Stelle einer Einfach-Kupplung eine Mehrfach-Kupplung aufweisen, wodurch der Anschluß von zwei oder mehr Steckern 6 an ein einziges Verbindungskabel 5 ermöglicht wird.

## Patentansprüche

1. Leit/Steuersystem mit einem Zentralrechner (10), einem Bus (9) und einer Vielzahl von Eingabeeinheiten und/oder Ausgabeeinheiten und/oder Ein/Ausgabe-Einheiten und/oder Sensoren und/oder Aktoren (1.1, 1.2,...1.n) - nachstehend Einheiten genannt - ,
a) mit mehreren Bus-Stecker (2.1, 2.2,...2.n), welche einerseits über eine erste Steckvorrichtung (3) mit einer Einheit (1.1, 1.2,...1.n) und andererseits über ein Verbindungskabel (5) mit dem Bus (9) verbunden sind,
b) wobei die Bus-Stecker (2.1, 2.2....2.n) einen zur Signalanpassung der zwischen der Einheit (1.1, 1.2,...1.n) und dem Bus (9) auszutauschenden Signale und zur Aktivierung/Deaktivierung der Einheit (1.1, 1.2,...1.n) und zur Einstellung von spezifischen Parametern der Einheit (1.1, 1.2,...1.n) dienenden Mikrorechner aufweisen,
c) wobei die Bus-Stecker (2.1, 2.2,...2.n) eine zweite, am Verbindungskabel (5) angeschlossene Steckvorrichtung (4) aufweisen,
d) wobei das Verbindungskabel (5) einen zur zweiten Steckvorrichtung (4) kompatiblen Stecker (6) aufweist,
e) wobei der Anschluss an den Bus (9) über eine Bus-Ankopplung (8) mit einer zum Stecker (6) kompatiblen Steckvorrichtung (7) erfolgt,
f) wobei die Bus-Stecker (2.1, 2.2,...2.n) mit einem über einen entsprechenden optischen Sender ansteuerbaren optischen Empfänger ausgerüstet sind, wodurch der Aktivierung/Deaktivierungs-Zustand der Einheit (1.1, 1.2,...1.n) einstellbar ist und/oder einer Parameter-Vorgabe erfolgt.

2. Bus-Stecker (2.1, 2.2,...2.n)
a) welcher über eine erste Steckvorrichtung (3) an eine(n) zugeordnete Eingabeeinheit oder Ausgabeeinheit oder Ein/Ausgabeeinheit oder Sensor oder Aktor - nachstehend Einheit (1.1,1.2, .....1.n) genannt - anschließbar ist,
b) welcher mit einer zweiten Steckvorrichtung (4) und mit einem Verbindungskabel (5) versehen ist,
c) wobei das Verbindungskabel (5) über einen Stecker (6) an seinem Ende in die zweite Steckvorrichtung (4) einer benachbarten Einheit (1.1, 1.2, .....1.n) oder in eine Steckvorrichtung (7) einer Bus-Ankopplung (8) greifen kann, wodurch die Verbindung mit einem Bus (9) und einem Zentralrechner (10) des Busses herstellbar ist,
d) wobei intern beim Bus-Stecker (2.1, 2.2,...2.n) die Verbindungskontakte der zweiten Steckvorrichtung (4) mit den entsprechenden Leitungen des Verbindungskabels (5) verbunden sind,
e) wobei ein Mikrorechner zur individuellen Signalanpassung der zwischen der Einheit (1.1, 1.2, .....1.n) und dem Bus (9) auszutauschenden Signale, zur individuellen Aktivierung / Deaktivierung der Einheit (1.1, 1.2, .....1.n) und zur individuellen Einstellung von spezifischen Parametern der Einheit (1.1, 1.2, .....1.n) dient,
f) wobei er mit einem über einen entsprechenden optischen Sender ansteuerbaren optischen Empfänger ausgerüstet ist, wodurch der Aktivierung Deaktivierungs-Zustand der Einheit (1.1, 1.2, .....1.n) einstellbar ist und/oder eine Parameter-Vorgabe erfolgen kann.

3. Bus-Stecker (2.1, 2.2,...2.n) nach Anspruch 2, **dadurch gekennzeichnet, dass** er mit einer Anzeige zur Visualisierung des aktuellen Aktivierung Deaktivierungs-Zustandes der Einheit (1.1, 1.2, .....1.n) versehen ist.

4. Baukasten-System mit Bus-Steckern nach einem der Ansprüche 2 - 3, **dadurch gekennzeichnet dass** Bus-Stecker (2.1, 2.2,...2.n) unterschiedlicher Leistungsklassen vorgesehen sind.

5. Baukasten-System mit Bus-Steckern nach einem der Ansprüche 2 - 3, **dadurch gekennzeichnet dass** Bus-Stecker (2.1, 2.2,...2.n) mit Verbindungskabeln (5) unterschiedlicher Längen vorgesehen sind.

6. Baukasten-System mit Bus-Steckern nach einem der Ansprüche 2 - 3, **dadurch gekennzeichnet, dass** Verlängerungs-Verbindungskabelvorgesehen sind.

7. l3aukasten-System nach Anspruch 6, **gekennzeichnet durch** Verlängerungs-Verbindungskabel mit Mehrfach-Kupplung.

## Claims

1. A guide/control system, comprising a central computer (10), a bus (9) and a plurality of input units and/or output units and/or input/output units and/or sensors and/or actuators (1.1, 1.2, .... 1.n), which are referred to hereinafter as units,
a) with several bus connectors (2.1, 2.2, .... 2.n) which are connected with the bus (9) on the one hand via a first plug-in apparatus (3) with a unit (1.1, 1.2, .... 1.n) and on the other hand via a connecting cable (5);
b) with the bus connector (2.1, 2.2, .... 2.n) comprising a microcomputer used for signal matching of the signals to be exchanged between the unit (1.1, 1.2, .... 1.n) and the bus (9) and for activating/deactivating the unit (1.1, 1.2, .... 1.n) and for setting specific parameters of the unit (1.1, 1.2, .... 1.n) ;
c) with the bus connector (2.1, 2.2, .... 2.n) having a second plug-in apparatus (4) connected to the connecting cable (5);
d) with the connecting cable (5) having a connector (6) compatible with the second plug-in apparatus (4);
e) with the connection to the bus (9) occurring via a bus coupling (8) with a plug-in apparatus (7) compatible with the connector (6);
f) with the bus connector (2.1, 2.2, .... 2.n) being equipped with an optical receiver that can be triggered via respective optical transmitters, through which the activation/deactivation state of the unit (1.1, 1.2, .... 1.n) can be set and/or the predetermination of parameters is effected.

2. A bus connector (2.1, 2.2, .... 2.n)
a) which can be connected via a first plug-in apparatus (3) to an associated input unit or output unit or input/output unit or sensor or actuator, which hereinafter are referred to as unit (1.1, 1.2, .... 1.n);
b) which is provided with a second plug-in apparatus (4) and with a connecting cable (5);
c) with the connecting cable (5) being able to grip via a connector (6) at its end into the second plug-in apparatus (4) of an adjacent unit (1.1, 1.2, .... 1.n) or into a plug-in apparatus (7) of a bus coupling (8), through which the connection can be produced with a bus (9) and a central computer (10) of the bus;
d) with the connecting contacts of the second plug-in apparatus (4) being connected with the respective lines of the connecting cable (5) internally in the bus connector (2.1, 2.2, .... 2.n);
e) with a microcomputer being used for individual signal matching of the signals to be exchanged between the unit (1.1, 1.2, .... 1.n) and the bus (9), for individual activation/deactivation of the unit (1.1, 1.2, .... 1.n) and for individual setting of specific parameters of the unit (1.1, 1.2, .... 1.n) ;
f) with the same being equipped with a receiver that can be triggered via a respective optical transmitter, through which the activation/deactivation state of the unit (1.1, 1.2, .... 1.n) can be set and/or the predetermination of parameters is effected.

3. A bus connector (2.1, 2.2, .... 2.n) according to claim 2, **characterized in that** it is provided with a display for visualizing the current activation/deactivation state of the unit (1.1, 1.2, .... 1.n).

4. A modular system with bus connectors according to one of the claims 2 to 3, **characterized in that** the bus connectors (2.1, 2.2, .... 2.n) of different power classes are provided.

5. A modular system with bus connectors according to one of the claims 2 to 3, **characterized in that** bus connectors (2.1, 2.2, .... 2.n) with connecting cables (5) of different length are provided.

6. A modular system with bus connectors according to one of the claims 2 to 3, **characterized in that** extension connecting cables are provided.

7. A modular system according to claim 6, **characterized by** extension connecting cables with multiple coupling.

## Revendications

1. Système de contrôle-commande avec un calculateur central (10), un bus (9) et une pluralité d'unités d'entrée et/ou d'unités de sortie et/ou d'unités d'entrée/sortie et/ou de capteurs et/ou d'actionneurs (1.1, 1.2,...1.n), appelés ci-après « unités »,
a) avec plusieurs connecteurs de bus (2.1, 2.2,...2.n) qui sont reliés, d'une part, par l'intermédiaire d'un premier dispositif de connexion ,(3), à une unité (1.1, 1.2,...1.n), et d'autre part au bus (9), par l'intermédiaire d'un câble de connexion (5),
b) dans lequel les connecteurs de bus (2.1, 2.2,...2.n) présentent un micro-ordinateur servant à l'adaptation des signaux à échanger entre l'unité (1.1, 1.2,...1.n) et le bus (9) et à l'activation et désactivation de l'unité (1.1, 1.2,...1.n) ainsi qu'au réglage de paramètres spécifiques de l'unité (1.1, 1.2,...1.n),
c) dans lequel les connecteurs de bus (2.1, 2.2,...2.n) présentent un deuxième dispositif de connexion (4) raccordé au câble de connexion (5),
d) dans lequel le câble de connexion (5) présente un connecteur (6) compatible avec le deuxième dispositif de connexion (4),
e) dans lequel le branchement sur le bus (9) est réalisé par un couplage de bus (8) avec un dispositif de connexion (7) compatible avec le connecteur (6),
f) dans lequel les connecteurs de bus (2.1, 2.2,...2.n) sont équipés d'un récepteur optique pouvant être activé par un émetteur optique correspondant, de sorte que l'état d'activation et de désactivation de l'unité (1.1, 1.2,...1.n) est réglable et/ou qu'il y a une définition de paramètres.

2. Connecteur de bus (2.1, 2.2,...2.n)
a) pouvant être connecté par l'intermédiaire d'un premier dispositif de connexion (3) à une unité d'entrée ou unité de sortie ou unité d'entrée/sortie ou à un capteur ou actionneur associés, appelés ci-après « unité » (1.1, 1.2, ...1.n),
b) qui est muni d'un deuxième dispositif de connexion (4) et d'un câble de connexion (5),
c) dans lequel le câble de connexion (5) peut se mettre en prise à son extrémité, par un connecteur (6), dans le deuxième dispositif de connexion (4) d'une unité (1.1, 1.2,... 1.n) voisine ou dans un dispositif de connexion (7) d'un couplage de bus (8), ce qui permet d'établir la connexion avec un bus (9) et un calculateur central (10) du bus,
d) dans lequel, à l'intérieur des connecteurs de bus (2.1, 2.2,...2.n), les contacts de connexion du deuxième dispositif de connexion (4) sont reliés avec les lignes correspondantes du câble de connexion (5),
e) dans lequel un micro-ordinateur sert à l'adaptation individuelle des signaux à échanger entre l'unité (1.1, 1.2,... 1.n) et le bus (9) pour l'activation ou la désactivation individuelles de l'unité (1.1, 1.2,...1.n) et pour le réglage individuel de paramètres spécifiques de l'unité (1.1, 1.2,...1.n),
f) qui est équipé d'un récepteur optique pouvant être commandé par un émetteur optique correspondant, ce qui permet de régler l'état d'activation ou de désactivation de l'unité (1.1, 1.2,...1.n) et/ou de procéder à une définition de paramètres.

3. Connecteur de bus (2.1, 2.2,...2.n) selon la revendication 2, **caractérisé en ce qu'**il est équipé d'un affichage pour la visualisation de l'état d'activation ou de désactivation actuel de l'unité (1.1, 1.2,....1.n).

4. Système modulaire avec des connecteurs de bus selon l'une des revendications 2 ou 3, **caractérisé en ce que** des connecteurs de bus (2.1, 2.2,...2.n) de différentes classes de performances sont prévus.

5. Système modulaire avec des connecteurs de bus selon l'une des revendications 2 ou 3, **caractérisé en ce que** des connecteurs de bus (2.1, 2.2,...2.n) avec des câbles de connexion (5) de différentes longueurs sont prévus.

6. Système modulaire avec des connecteurs de bus selon l'une des revendications 2 ou 3, **caractérisé en ce que** des câbles de connexion de rallonge sont prévus.

7. Système modulaire selon la revendication 6, **caractérisé en ce qu'**il comporte des câbles de connexion de rallonge à couplage multiple.
